(19) Europäisches Patentamt
European Patent Office
Office européen des brevets

(11) Veröffentlichungsnummer: **0 325 989 A2**

# (12) EUROPÄISCHE PATENTANMELDUNG

(21) Anmeldenummer: **89100687.6**

(51) Int. Cl.4: **C08G 69/12 , C08K 3/34**

(22) Anmeldetag: **17.01.89**

(30) Priorität: **28.01.88 DE 3802470**

(43) Veröffentlichungstag der Anmeldung: **02.08.89 Patentblatt 89/31**

(84) Benannte Vertragsstaaten: **DE FR GB IT**

(71) Anmelder: **BAYER AG**
**D-5090 Leverkusen 1 Bayerwerk(DE)**

(72) Erfinder: **Spies, Manfred**
**Friedrich-Ebert-Strasse 111**
**D-3550 Marburg(DE)**
Erfinder: **Heitz, Walter, Prof. Dr.**
**Am Schmidtborn 5**
**D-3575 Kirchhain(DE)**

## (54) Verfahren zur Herstellung von Polybenzamiden.

(57) Die Erfindung betrifft ein Verfahren zur Herstellung von Poly(1,4-benzamid) im Gemisch mit $SiO_2$ durch Polykondensation von 4-Aminobenzoesäure in Gegenwart von $SiCl_4$ in 1,3-Dimethyltetrahydro-2(1H)-pyrimidinon in Gegenwart von Salzen wie Lithiumchlorid oder Calciumchlorid.

EP 0 325 989 A2

Xerox Copy Centre

# Verfahren zur Herstellung von Polybenzamiden

Gegenstand der Erfindung ist ein Verfahren zur Herstellung von höhermolekularem Poly(1,4-benzamid) in Gemisch mit $SiO_2$ durch Polykondensation von 4-Aminobenzoesäure, das dadurch gekennzeichnet ist, daß man 4-Aminobenzoesäure in Gegenwart von $SiCl_4$, Metall-Salzen wie Lithiumchlorid oder Calciumchlorid, in 1,3-Dimethyltetrahydro-2(1H)-pyrimidinon als Lösungsmittel bei Temperaturen von 50-200° C, vorzugsweise 80-120° C und Drücken von $10^{-3}$ bis 10 bar, vorzugsweise einem bar polykondensiert.

Durch Verwendung von 1,3-Dimethyltetrahydro-2(1H)-pyrimidinon als Lösungsmittel gelingt die Synthese in homogener Phase mit besonders hohen Molekulargewichten im Gegensatz zu anderen bei der Polyamidsynthese üblichen Lösungsmitteln wie z.B. N-Methylpyrrolidon oder N,N-Dimethylacetamid. Man erhält ein Poly(1,4-benzamid), das in flüssigkristalliner Phase im Lösungsmittel vorliegt.

Die Reaktionstemperatur kann auch schrittweise, beispielsweise durch schrittweise Temperatursteigerung um jeweils 5-50, vorzugsweise 10-20° C erreicht werden.

Pro Mol Aminobenzoesäure werden 0,5 bis 2 Mol $SiCl_4$, vorzugsweise 0,8 bis 1.5 Mol, eingesetzt.

Poly(1,4-benzamid) ist bekannt. Die Synthese gelingt entweder nach einem mehrstufigen Verfahren (z.B. Macromolecules 10, Seiten 1390 bis 1396 (1977)) oder mit relativ teuren Phosphorverbindungen (z.B. Journ. Polym. Sci.: Polym. Chem. Ed. 13, 1373 bis 1380 (1975)).

$SiCl_4$ ist als Kondensationsmittel für die Polyamidsynthese in heterogener Phase bekannt (Fällungskondensation z.B. Makromol. Chem. Rapid Commun. 6, 111-118 (1985), DE-OS 3 505 903, 3 505 904).

Das erfindungsgemäße Verfahren läuft einstufig ab. Die für die Durchführung der Reaktion notwendige Endtemperatur kann durch langsames Erhöhen der Temperatur während der Reaktion eingestellt werden. Das erfindungsgemäße Verfahren kann bei Drücken von $1x10^{-3}$ bis 10 bar, vorzugsweise Atmosphärendruck durchgeführt werden. Bei Temperaturen über dem Siedepunkt der Umsetzungsmischung, kann ein Überdruck erforderlich sein.

Ein geeignetes Lösungsmittel für die Reaktion zum erzielen hoher Molekulargewichte ist ein Stickstoffheterocyclus wie 1,3-Dimethyltetrahydro-2(1H)-pyrimidinon. Als Lösungsmittel kann auch 1,3-Dimethyltetrahydro-2(1H)-pyrimidinon im Gemisch mit unter den Reaktionsbedingungen inerten organischen Basen, z.B. Pyridin eingesetzt werden.

Die Konzentration der Aminobenzoesäure im Lösungsmittel beträgt 0,1 bis 1,5 Mol/l, bevorzugt 0,4-0,8 Mol/l.

Die Konzentration an Metallsalz im Lösungsmittel liegt bei 0,1 bis 3 Mol/l, bevorzugt 0,8 bis 1,6 Mol/l.

Bei der Reaktion entstehen lyotrope Lösungen aus Polybenzamiden, Metallsalzen (z.B. LiCl) und Lösungsmittel.

Die Lösungen enthalten weiterhin $SiO_2$ und können unmittelbar zu Filmen oder Fasern verarbeitet werden. Die Polymermoleküle sind in diesen lyotropen Lösungen orientiert (weitgehend parallel ausgerichtet). Diese Eigenschaft besitzt technische Bedeutung, da hierdurch z.B. Fasern mit hohen Modulwerten erhalten werden können. Der Vorteil gegenüber dem Stand der Technik ist die unmittelbare Verarbeitbarkeit der Reaktionslösung. Das $SiO_2$ ist in dem Material außerordentlich fein und gleichmäßig verteilt. Es kann als aktiver Füllstoff betrachtet werden.

Durch Ausfällen der Polybenzamide in einem Fällungsbad und anschließendem Lösen in $H_2SO_4$ oder N-Methylpyrrolidon/LiCl und Filtration kann das $SiO_2$ abgetrennt werden. Aus diesen Lösungen können die Polybenzamide in reiner Form isoliert werden.

Die erfindungsgemäße Umsetzung kann z.B. durch folgendes Reaktionsschema beschrieben werden:

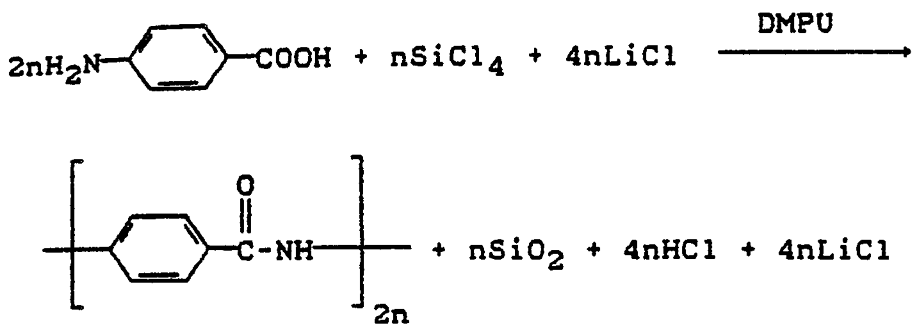


Die Reaktion führt zu Polybenzamiden mit Polymerisationsgraden von 2 bis 400, bevorzugt 5 bis 200. Die Regulierung des Molekulargewichtes erfolgt im wesentlichen über das eingesetzte Molverhältnis Aminobenzoesäure zu Halogenid.

Die erzielten Molekulargewichte werden über die inhärente Viskiosität ermittelt, welche bei 30° C an Lösungen von 0,5 g Polyamid in 100 ml konz. $H_2SO_4$ gemessen wurde.

Die erfindungsgemäß erhaltenen Polyamide, sowie die Gemische mit $SiO_2$ sind in bekannter Weise technisch brauchbar.

Beispiel A:

2.89 g (68,25 mMol) LiCl werden in einem ausgeheizten 100 ml Dreihalskolben mit KPG-Rührer, Rückflußkühler und Septum in 50 ml 1,3-Dimethyltetrahydro-2(1H)-pyridinon gelöst. Anschließend werden 4,68 g (34,125 mMol) 4-Aminobenzoesäure zugesetzt und gelöst. Bei Raumtemperatur (21° C) tropft man 2,93 mMol) Siliciumtetrachlorid zu und rührt für 24 Stunden bei Raumtemperatur. Der Ansatz wird dann für 24 Stunden auf 50° C erwärmt. Anschließend wird für 48 Stunden die Reaktionstemperatur von 100° C beibehalten.

Man erhält eine lyotrope Lösung aus Poly(1,4-benzamid) in 1,3-Dimethyltetrahydro-2(1H)-Pyrimidinon/LiCl.

Das $SiO_2$ kann abgetrennt werden, indem man die Lösung für 24 Stunden in 500 ml Wasser rührt, den Rückstand absaugt und 6 Stunden in THF refluxiert. Das Produkt wird erneut abgesaugt und getrocknet. Man erhält 5,33 g eines Gemisches aus Poly(1,4-benzamid) und Silicumdioxid. Dieses Gemisch löst man in 300 ml konz. Schwefelsäure und filtriert über eine Glasfritte. Das Poly(1,4-benzamid) wird in Wasser ausgefällt, abgesaugt, gründlich mit heißem Wasser, Methanol und Aceton nachgewaschen und getrocknet.
Ausbeute: 3,35 g = 82 %
inhärente Viskosität: 1,1.

Beispiel B:

2.89 g (68,25 mMol) LiCl werden in einem ausgeheizten 100 ml Dreihalskolben mit KPG-Rührer, Rückflußkühler und Septum in 50 ml 1,3-Dimethyltetrahydro-2(1H)-pyrimidinon und 8.09 ml (102,36 mMol) Pyridin (als Base) gelöst. Anschließend werden 4,68 g (34,125 mMol) 4-Aminobenzoesäure zugesetzt und gelöst. Bei Raumtemperatur (21° C) tropft man 2,93 ml (25,59 mMol) Siliciumtetrachlorid zu und rührt für 24 Stunden bei Raumtemperatur. Der Ansatz wird dann für 24 Stunden aus 50° C erwärmt. Anschließend wird für 24 Stunden die Reaktionstemperatur von 100° C beibehalten.

Man erhält eine lyotrope Lösung aus Poly(1,4-benzamid) in 1,3-Dimethyltetrahydro-2(1H))-pyrimidinon/Pyridin/LiCl.

Das $SiO_2$ kann abgetrennt werden, indem man das Reaktionsgemisch in 500 ml 2N HCl für 24 Stunden rührt, den Rückstand absaugt und gründlich mit Wasser und Aceton wäscht. Anschließend wird das Produkt 6 Stunden in THF refluxiert und erneut abgesaugt und getrocknet. Man erhält 5,01 g eines Gemisches aus Poly(1,4-benzamid) und Siliciumoxid. Das Gemisch löst man in 300 ml konz. Schwefelsäure und filtriert

über eine Glasfritte. Das Poly(1,4-benzamid) wird in Wasser ausgefällt, abgesaugt, gründlich mit heißem Wasser, Methanol und Aceton nachgewaschen und getrocknet.
Ausbeute: 2,91 g = 72 %
inhärente Viskosität: 0,92.

Beispiel C:

1,91 g (45 mMol) LiCl werden in einem ausgeheizten 100 ml Dreihalskolben mit KPG-Rührer, Rückflußkühler und Septum in 50 ml N,N-Diemthylacetamid gelöst. Anschließend werden 6,16 (45 mMol) 4-Aminobenzoesäure zugesetzt und gelöst. Unter Eiskühlung werden 3,13 ml (27 mMol) Siliciumtetrachlorid zugetropft. Anschließend wird für 24 Stunden die Reaktionstemperatur von 130° C beibehalten.

Zur Aufarbeitung wird das Reaktionsgemisch in 500 ml Wasser für 6 Stunden gerührt, der Rückstand abgesaugt und gründlich mit Wasser und Aceton gewaschen und getrocknet.

Man erhält 1,6 g eines Gemisches aus Poly(1,4-benzamid) und Siliciumdioxid. Das Gemisch löst man in 100 ml konz. Schwefelsäure und filtriert über eine Glasfritte. Das Poly(1,4-benzamid) wird in Wasser ausgefällt, abgesaugt, gründlich mit heißem Wasser, Methanol und Aceton nachgewaschen und getrocknet.
Ausbeute: 0,49 g = 10 %, inh. Viskosität: 0,08.

## Ansprüche

1. Verfahren zur Herstellung von höhermolekularen Poly(1,4-benzamiden) im Gemisch mit $SiO_2$ durch Polykondensation von 4-Aminobenzoesäure, dadurch gekennzeichnet, daß man 4-Aminobenzoesäure in Gegenwart von $SiCl_4$, Metallsalzen und in einem Lösungsmittel wie 1,3-Dimethyltetrahydro-2(1H)-pyrimidinon bei Temperaturen von 50-200° C und Drücken von $1x10^{-3}$ bis 10 bar umsetzt, wobei pro Mol Aminobenzoesäure 0,5 bis 2 Mol $SiCl_4$ eingesetzt werden.

2. Verfahren gemäß Anspruch 1, dadurch gekennzeichnet, daß die Reaktionstemperatur schrittweise erreicht wird.

3. Lyotrope Lösung aus Poly(1,4-benzamid) in 1,3-Dimethyltetrahydro-2(1H)-pyrimidinon/LiCl mit $SiO_2$.